(19) Europäisches Patentamt
European Patent Office
Office européen des brevets

(11) **EP 3 131 688 B1**

(12) **EUROPEAN PATENT SPECIFICATION**

(45) Date of publication and mention
of the grant of the patent:
**24.01.2018  Bulletin 2018/04**

(21) Application number: **15730550.9**

(22) Date of filing: **11.02.2015**

(51) Int Cl.:
**B09C 1/08** (2006.01)        **A62D 3/00** (2006.01)
**C04B 18/04** (2006.01)        **A62D 101/24** (2007.01)

(86) International application number:
**PCT/SI2015/000007**

(87) International publication number:
**WO 2015/160313 (22.10.2015 Gazette 2015/42)**

(54) **PROCESS FOR OBTAINING HEALTH- AND ENVIRONMENTALLY ACCEPTABLE CONSTRUCTION MATERIALS FROM SOIL CONTAINING WATER SOLUBLE COMPOUNDS OF HEAVY METALS**

VERFAHREN ZUR GEWINNUNG VON GESUNDHEITLICH UND ÖKOLOGISCH VERTRÄGLICHEN BAUMATERIALIEN AUS BODEN, DER WASSERLÖSLICHE VERBINDUNGEN AUS SCHWERMETALLEN ENTHÄLT

PROCÉDÉ POUR L'OBTENTION DE MATÉRIAUX DE CONSTRUCTION ACCEPTABLES D'UN POINT DE VUE ENVIRONNEMENTAL ET SANITAIRE À PARTIR D'UNE TERRE CONTENANT DES COMPOSÉS DE MÉTAUX LOURDS HYDROSOLUBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.04.2014  SI 201400151**

(43) Date of publication of application:
**22.02.2017  Bulletin 2017/08**

(73) Proprietors:
- **Zavod za Gradbenistvo Slovenije**
  **1000 Ljubljana (SI)**
- **INSTITUT JOZEF STEFAN**
  **1000 Ljubljana (SI)**

(72) Inventors:
- **MLADENOVIC, Ana**
  **4220 Skofja Loka (SI)**

- **OPRCKAL, Primoz**
  **3212 Vojnik (SI)**
- **KRZISNIK, Nina**
  **4224 Gorenja vas (SI)**
- **MILACIC, Radmila**
  **1356 Dobrova (SI)**
- **SCANCAR, Janez**
  **1356 Dobrova (SI)**
- **SEVER SKAPIN, Andrijana**
  **1358 Log pri Brezovici (SI)**

(74) Representative: **Macek, Gregor**
**ITEM d.o.o.**
**Resljeva 16**
**1000 Ljubljana (SI)**

(56) References cited:
**EP-A2- 2 087 947     CN-A- 102 974 601
FR-A1- 2 990 363**

**Description**

The invention belongs to working operations, namely to methods of remediation of contaminated soil, by which the soil containing hazardous compounds is by means of chemical reactions transformed into less harmful substance.

The purpose of the invention is to enable economically efficient obtaining of construction material, which should be chemically neutral, inert and acceptable for the environment and human health, by using the soil, in which the concentration of water soluble compounds of heavy metals, in particular those on the basis of arsenic *As* and/or cadmium *Cd* and/or lead *Pb* and/or zinc Zn, essentially exceeds the limit values, which are acceptable for environment and/or are not harmful for human health, so that the content of said contaminants in such obtained material will be below each pre-determined values.

Quite exactly, the purpose of the invention is transformation of such contaminated soil, in which the contents of chemical elements in a form of water soluble compounds of heavy metals are the following:

$$As = 1{,}00 - 10{,}00 \text{ mg/kg of dry matter in said contaminated soil;}$$

$$Cd = 0{,}10 - 1{,}00 \text{ mg/kg of dry matter in said contaminated soil;}$$

$$Pb = 1{,}00 - 10{,}00 \text{ mg/kg of dry matter in said contaminated soil;}$$

and

$$Zn = 5{,}00 - 50{,}00 \text{ mg/kg of dry matter in said contaminated soil;}$$

by means of transforming thereof into construction material, which should be acceptable for the environment and human health, in which the content of said chemical elements in a form of water soluble compounds of heavy metals should not exceed the following limit values:

$$As \leq 0{,}50 \text{ mg/kg of dry matter in such obtained construction material;}$$

$$Cd \leq 0{,}04 \text{ mg/kg of dry matter in such obtained construction material;}$$

$$Pb \leq 0{,}50 \text{ mg/kg of dry matter in such obtained construction material;}$$

$$Zn \leq 4{,}00 \text{ mg/kg of dry matter in such obtained construction material;}$$

wherein such obtained construction material should be inert and chemically neutral.

Remediation of the soil contaminated with compounds on the basis of arsenic *As* is disclosed in CN 102974601 A. Such remediation is based on mixing of contaminated soil with montmorillonite, lime, magnesium carbonate and water. By means of such process, the content of *As* can be reduced below a pre-determined value, but the obtained products are at least slightly alkaline and not chemically neutral, and are as such therefore still harmful for the environment.

The present invention refers to a process for obtaining health- and environment acceptable, chemically neutral and inert construction material, wherein the concentration of water soluble compounds of heavy metals in such material does not exceed pre-determined limit values, namely

$$As \leq 0{,}50 \text{ mg/kg of dry matter in such obtained construction material;}$$

$$Cd \leq 0{,}04 \text{ mg/kg of dry matter in such obtained construction material;}$$

$$Pb \leq 0{,}50 \text{ mg/kg of dry matter in such obtained construction material;}$$

$$Zn \leq 4{,}00 \text{ mg/kg of dry matter in such obtained construction material;}$$

and wherein said material is obtained from a contaminated soil containing water soluble chemical compounds of heavy metals, which are harmful for the environment and human health, wherein the concentration thereof essentially exceeds the previously mentioned limit values, namely

$$As = 1{,}00 - 10{,}00 \text{ mg/kg of dry matter in said contaminated soil;}$$

$$Cd = 0{,}10 - 1{,}00 \text{ mg/kg of dry matter in said contaminated soil;}$$

$$Pb = 1{,}00 - 10{,}00 \text{ mg/kg of dry matter in said contaminated soil;}$$

and

$$Zn = 5{,}00 - 50{,}00 \text{ mg/kg of dry matter in said contaminated soil.}$$

The process according the invention comprises the following steps:

i) preparation of the contaminated soil, which includes excavation, separation of dry particles of contaminated soil by means of sieving in order to obtain fractions below 32 mm and above 32 mm, upon which the fraction of particles above 32 mm is crushed to granulation below 32 mm and temporarily deposited;
ii) mixing of such obtained and prepared contaminated soil according to step i) with a dispersion of Fe-nanoparticles;
iii) adding dry bentonite clay in powder form to said mixture of prepared contaminated soil and Fe-nanoparticles by taking into consideration content of the clay fraction within the contaminated soil itself, which is then followed by homogenization of such obtained mixture; iv) adding calcareous fly ash (CFA), which is followed by mixing and optionally adjusting of moisture to optimum value, which can deviate up to $\pm$ 2 %;
v) *in-situ* or *ex-situ* application of such obtained material by spreading to layers having thickness up to 30 cm and compacting such established layer of construction material by means of suitable building machinery. The average density of such compacted layer is $\geq$ 95 % of the density of the mixture, which is obtained by means of modified Proctor method (SIST EN 13286-2:2010/AC:2013). The lower limit value of density can deviate up to 3 % in average.

Said dispersion of Fe-nanoparticles, which is added to the soil in step ii), contains up to 8 wt. % of maghemite particles, or up to 3 wt. % of nZVI nanoparticles per dry weight of a contaminated soil.
Said bentonite clay is added in said step iii) in amount up to 10 wt. % per dry weight of a contaminated soil. Whenever the content of clay fraction or particles with granulation $\leq$ 0,002 mm in the soil is high (according to classification in (SIST EN ISO 14688-1:2002/AC:2008), then the zeolitic tuff in powder form, is added to the mixture of contaminated soil and dispersion of Fe-nanoparticles instead of said bentonite clay. Such circumstances occur, if the content of clay, namely particles with granulation $\leq$ 0,002 mm in the soil (SIST EN ISO 14688-1:2002/AC:2008), exceeds 40 wt. % per dry weight of the contaminated primary soil, and is pursuant to geotechnical classification (SIST EN ISO 14688-1:2002/AC:2008) marked as Cl, siCl, saCl, sasiCl, grCl or grsiCl.
Said zeolitic tuff is added in amount up to 10 wt. % per dry weight of a contaminated soil.
The quantity of said calcareous fly ash (CFA) amounts up to 20 wt. % per dry weight of contaminated soil.
The objective of the invention is therefore *in-situ* processing as well as *in-situ* or *ex-situ* application of such processed contaminated soil by transforming it into a construction material for a structural fills or embankments.
Previously mentioned excessive concentrations of water soluble zinc (*Zn*), cadmium ($C_d$), arsenic (*As*) and lead (*Pb*) are by means of such process reduced below the previously mentioned limit values, determined for inert material.

Said process for transforming of each contaminated soil into a construction material is performed by means of combination of mechanical, chemical and geotechnical measures. Amendments used for remediation are represented by nanoparticles of zerovalent iron (nZVI) or maghemite nanoparticles, calcareous fly ash from coal combustion and bentonite clays or zeolitic tuffs.

Metals as pollutants are present in the environment merely due to human activities, in particular industrial activities. Their influence on environment is however not depending exclusively on total concentration thereof, but in particular on their content in easily soluble mobile fraction. A degree of pollution of waste materials is pursuant to Slovenian legislation determined by means of a standardized test, which is based on leaching with water. Said test is performed for 24 hours by means of shaking, wherein the ratio between the material and water is 1:10, and the granulation of material is below 10 mm (SIST EN 12457-4:2004). Concentration of the pollutant in the water eluate determines each degree of pollution and declares each waste material as inert, non-hazardous or hazardous. In order to protect the environment, the hazardous waste materials, which contain metals in high concentrations and are not suitable for deposition, must be remediated. Remediation leads to immobilization of content of metals in easily soluble fraction, upon which the standardized test for determining of each chemical properties of a construction material (SIST EN 1744-3:2002) is used in order to prove that concentration of each particular pollutant in each water eluate does not exceed the limit value as prescribed for inert wastes. In this, the process of leaching is very similar, since the ratio between the weight of remediated material and the volume of water is 1:10, and the material is exposed to mixing for 24 hours_by means of a standard impeller mixer. Concentration of the pollutant in the water eluate determines a degree of immobilization of harmful metals in each remediated material, which shall not exceed the previously mentioned limit values.

The process according to the invention proposes a new and inventive approach for resolving of problems related to environment pollution. Such technology enables restoration of seriously degraded areas resulting from long-term industrial activities. These are mainly areas of iron and steel processing plants or metallurgical-chemical plants, where in particular inorganic pollutants were released to the air, water and soil, and where huge amounts of industrial waste were deposited. When industrial activities were terminated, these areas remained not only degraded and inoperative but also represent a permanent problem of pollution of the environment due to surface and underground water streams and also due to air emissions of dust particles.

Heavy metals like *Zn, Cd, Pb* and *As,* and their compounds thereof, are usually present in the environment as pollutants, in a high concentrations of water-soluble and mobile fraction. The environment may also be polluted with other elements, and moreover, the problems may also occur due to high values of water-soluble sulfate ions.

Arsenic *As* is the element, which belongs to semi-metals. Due to intensive application thereof in agriculture (manures, nutrition additives, spraying agents), in leather-processing and wood-processing industry, namely in protection of wood by CCA (abbreviation for *chromated copper arsenate*), due to emissions by ore-processing and metallurgical activities, or by the coal combustion, arsenic is deemed to be a commonly present environment pollutant. In the soil, arsenic is commonly present in the form of oxyanions *As(III)* in *As(VI),* which are present in the form of inorganic complexes or organic compounds. Harmful influence of arsenic to the human body reflects in symptoms in view of vascular disorders, skin diseases and increasing the risk of cancer.

Cadmium *Cd* is a metallic element with a low melting point, and is one of the most mobile and harmful heavy metals. Where the soil has been polluted with cadmium as a consequence of metallurgical activities, cadmium is always present together with zinc *Zn,* wherein the concentration of cadmium *Cd* is usually approximately 200-times lower than the concentration of zinc *Zn.* Another source of pollution with cadmium is waste resulting from *Ni/Cd* batteries, waste resulting from steel-processing industry and manufacturing of pigments, as well as intensive application of manures containing cadmium. The commonly present form of cadmium in the soil is *Cd(II).* Regarding the organisms, cadmium is a non-essential element, which induces numerous harmful effects and symptoms, in particular chronical diseases of kidneys and bones, enzyme disorders and increasing the risk of cancer.

Lead *Pb* is due its malleable properties, specific density and low melting point one of the most useful heavy metals, but is also a harmful non-essential metallic element. Pollution of the soil with lead usually results from processing of lead ores, metallurgical industry, manufacturing of pigments, and also from inappropriate treatment of waste resulting from lead batteries, water piping system, weapons etc. The most common form of lead in the soil is *Pb(II),* which, depending on conditions in each area, forms numerous inorganic or organic compounds. Harmful effects of lead *Pb* are seen in disorders of internal organs, kidneys and central nervous system, and the consequences are often deadly.

Zinc *Zn* is an essential metallic element, which is in small quantities required for regular functioning of organisms. It is also widely used for anti-corrosion protection (as sacrificed anode) in metal-processing industry. Pollution of the soil with zinc *Zn* merely results from metallurgical industry and mining activities, intensive application in agriculture_or also from waste water and household waste. The most common form of zinc in the soil is *Zn(II),* which forms various inorganic compounds. For organisms, *Zn* is in higher concentrations toxic. Poisoning with zinc *Zn* results in enzyme functioning disorders and disorders in functioning of internal organs.

In the practice, the following activities are normally performed prior to starting the initial step of preparation of the contaminated soil:

- cutting down and removing plants, animals and eventual municipal wastes;
- arranging temporarily infrastructure, which is required for initiation of operations, which can be performed under a tent or in other covered area, by which the emission of dust particles is prevented including contamination of the surrounding therewith, wherein also the workers must be furnished with appropriate personal protective requisites.

Preparation of the contaminated soil in the sense of the process according to the invention furthermore includes:

- excavation of the contaminated soil;
- separation of the soil by means of sieving to fractions below 32 mm and above 32 mm,
- crushing of fraction above 32 mm to a fraction below 32 mm;
- building a temporary deposition in the form of layers and in accordance with geotechnical procedures, by which the material is properly homogenized;
- performing a chemical analysis of such deposited material; and upon that
- a decision is made about the way of remediation, depending on results of chemical analysis and concentration of elements in water-soluble mobile fraction (test in accordance with a standardized method for characterization of waste on the basis of leaching pursuant to SIST EN 12457-4:2004).

Temporarily intermediate deposition of the polluted soil is performed as follows:

- the fundamental ground must be clean and flat;
- deposition consists of layers, the thickness of each layer is up to 0,5 m, and the complete height of the deposit is 5 m at maximum;
- the material must be protected against meteorological influences.

A subsequent step in the process includes mixing of the contaminated soil with a dispersion of iron nanoparticles, in which the substrate is water, and which are either maghemite particles in quantity up to 8 wt. %, or NZVI in smaller quantities up to 3 wt. %, both relative to the dry weight of a contaminated soil. Said mixing is performed in closed mixing systems, in which the moisture is maintained slightly above the optimal one, until the nanoparticles are satisfactory dispersed within the contaminated soil.

During a still further stage of remediation, up to 10 wt. % of dry bentonite clay in powder form per dry weight of contaminated soil is added to said wet mixture, depending on geo-mechanical properties of the soil. If the content of clay fraction in a primary contaminated soil is high, the quantity of added clay is lower. Upon addition of the bentonite clay such mixture is appropriately homogenized.

Whenever the content of clay fraction or particles with dimensions $\leq 0,002$ mm (pursuant to classification SIST EN ISO 14688-1:2004/AC:2008) in the primary contaminated soil is relative high, 10 wt. % of dry zeolite tuff in powder form is added to the soil instead of said bentonite clay, upon which such obtained mixture is appropriately homogenized.

This happens when the primary contaminated soil comprises more than 40% of the clay fraction, namely particles with dimensions $\leq 0,002$ mm (pursuant to classification SIST EN ISO 14688-1:2004/AC:2008) per weight and is pursuant to geo-technical classification (SIST EN ISO 14688-2:2004) marked as Cl, siCl, saCl, sasiCl, grCl or grsiCl.

Just prior to application, 20 wt. % of calcareous fly ash (CFA) is added to such obtained mixture, wherein the final mixing must assure an efficient distribution of added calcareous fly ash (CFA) within the complete media. Prior to termination of said mixing, the moisture is optionally adjusted to such optimal value, which enables achieving of each desired density of each layer.

The material is spread in layers having thickness up to 30 cm each. Then the layers are compacted by means of rollers with a required energy. The density of each layer must be in average at least $\geq 95$ % of the density of mixture achieved according to modified Procter method (SIST EN 13286-2:2010/AC:2013). The lower limit value of density can vary relative to the average value for 3 % at maximum.

After 28 days, a specimen is taken from such applied layer, upon which a chemical analysis of the water leaching from a remediated material is performed. Said material is prepared in accordance with standardized method of leaching as used in determination of chemical properties of aggregates (SIST EN 1744-3:2002), by which the inertness of the construction composite is proven.

Having regard to particles with dimensions within the range of micro- and millimeters, nanoparticles excel much larger specific surface area and reactiveness, which enhances the efficiency of remediation. Nanoparticles of zerovalent iron (nZVI) are efficient reductants, since the elementary iron $Fe^0$ in contact with water oxidizes to $Fe^{2+}$ in $Fe^{3+}$ and electrons are released. Such obtained iron oxyhydroxides have high adsorption properties. Remediation capability of nZVI is highly dependent on pH and composition of the remediated soil. Nanoparticles of zerovalent iron (nZVI) are efficient in immobilization of two-valent and three-valent ions of heavy metals (*As(III), Pb, Cd, Zn*) and five-valent arsenic *As(V)*. Mechanism of specific adsorption of heavy metals depends on standard redox potential ($E^0$) of each metallic

pollutant in comparison with standard redox potential $Fe^0$ of elementary iron. Metals having more negative or equal $E^0$ like $Fe^0$ of elementary iron in nZVI (like cadmium Cd, zinc Zn) can be removed exclusively by mechanism of specific adsorption on the surface of iron oxyhydroxides. Ions of metals and semi-metals (like e.g. arsenic $As$), the $E^0$ of which is much more positive than $Fe^0$ of the elementary iron, can be immobilized either by mechanisms of adsorption or reduction.

| Element | Redox reaction | $E^0(V)$ | |
|---|---|---|---|
| Fe | $Fe^0 \leftrightarrow Fe^{2+} + 2e^-$ | -0,44 | Remediation element in nZVI |
| Fe(II) | $Fe^{2+} <-> Fe^{3+} + e^-$ | +0,77 | Remediation element in nZVI and nanoparticles of iron oxides |
| As (III) | $As + H_2O \leftrightarrow H_3AsO_3 + 3e^- + 3H^+$ | +0,25 | Reduction and coprecipitation on iron nanoparticles |
| As (V) | $H_3AsO_3 + H_2O \leftrightarrow H_3AsO_4 + 2H^+ + 2e^-$ | +0,56 | Reduction and coprecipitation on iron nanoparticles |
| Cd | $Cd \leftrightarrow Cd^{2+} + 2e^-$ | -0,40 | Adsorption on the surface of iron nanoparticles |
| Pb | $Pb \leftrightarrow Pb^{2+} + 2e^-$ | -0,13 | Reduction, coprecipitation or adsorption on the surface of iron nanoparticles |
| Zn | $Zn \leftrightarrow Zn^{2+} + 2e^-$ | -0,76 | Adsorption on the surface of iron nanoparticles |

Maghemite iron nanoparticles are formed of mineral maghemite $\gamma Fe_2O_3$. In the presence of electromagnetic forces, they express supraparamagnetic properties. By maghemite nanoparticles, the mechanism of immobilization of heavy magnets is similar like by zerovalent iron nanoparticles nZVI. Surface adsorption processes are dominant, wherein the most efficient processes are specific adsorption or chemisorption and coprecipitation. In this, heavy metals are bond directly to oxide groups $\equiv FeOX$ of maghemite nanoparticles, and stable surface complexes are formed and integrated into a crystalline lattice.

Iron nanoparticles due to adhesive electromagnetic forces on the surface thereof adhere to the surface of particles within the polluted soil. During the processes of oxidation and transformation to iron oxyhydroxides they form coverings, which physically immobilize contaminants. Such obtained iron hydroxides express amphoteric properties and the capacity of adsorption of heavy metals at various pH values. By slightly acid pH values, they adsorb anions and oxyanions due to process of protonation. By neutral or slightly alkaline pH values, they adsorb cations and cationic complexes due to process of deprotonation.

| Most usual form of the element within the soil | Mechanism of adsorption of the contaminant on the surface of nanoparticles of iron oxides/hydroxides | |
|---|---|---|
| As(III) | $\equiv FeOH^0 + H_3A_SO3^0 \rightarrow \equiv FeH_2AsO_3^0 + H_2O$ | Specific complex |
| As(V) | $\equiv FeOH^0 + AsO_4^{3-} + 3H^+ \rightarrow \equiv Fe\ H_2AsO_4^0 + H_2O$ | $\downarrow$ Increasing alkalinity |
| | $\equiv FeOH^0 + AsO_4^{3-} + 2H^+ \rightarrow \equiv Fe\ H_2AsO_4^- + H_2O$ | $\downarrow$ by formation of a |
| | $\equiv FeOH^0 + AsO_4^{3-} + H^+ \rightarrow \equiv Fe\ H_2AsO_4^{2-} + H_2O$ | $\downarrow$ Specific complex |
| | $\equiv FeOH^0 + AsO_4^{3-} \rightarrow \equiv Fe\ H_2AsO_4^{3-}$ | $\downarrow$ |
| Cd(II) | $\equiv FeOH^0 + Cd^{2+} \rightarrow \equiv Fe\ OCd^+ + H^+$ | Specific complex |
| Pb(II) | $\equiv FeOH^0 + Pb^{2+} \rightarrow \equiv Fe\ OPb^+ + H^+$ | Specific complex |
| Zn(II) | $\equiv FeOH^0 + Zn^{2+} \rightarrow \equiv Fe\ OZn^+ + H^+$ | Specific complex |
| | $\equiv FeOH^0 + Zn^{2+} -\rightarrow \equiv Fe\ (OH)_{3(s)} + =ZnOH_2^+ + H^+$ | Surface precipitation |

Calcareous fly ash consists merely of crystalized inorganic particles, predominantly the following minerals: anhydrite $CaSO_4$, lime $CaO$, hematite $Fe_2O_3$, quartz $SiO_2$, melilite $Ca_2(Mg, Al)(Al, Si)_2O_7$, mullite $Al_6Si_2O_{13}$, merwinite

$Ca_3Mg(SiO_4)_2$, periclase $MgO$, tricalcium aluminate $Ca_3Al_2O_6$, gehlenite $Ca_2Al(AlSiO_7)$, anorthite $CaAl_2Si_2O_8$, akermanite $Ca_2Mg(Si_2O_7)$ and some others. The majority of ash represents glassy silicate particles (up to 70% per weight). The main chemical components of calcareous fly ashes are $SiO_2$; $Al_2O_3$, $CaO$, $FeO$ and $SO_3$. Due to high content of free $CaO$ (not less than 5% per weight, in average around 7% per weight), such ashes express latent hydraulic and puzzolan properties, and in contact with water forms hydration products, which are similar to those formed by hydration of Portland cement. Such processes lead to chemical and physical immobilization of heavy metals in each obtained mineral phases.

Processes of immobilization of heavy metals in the contaminated soil are enhanced by increasing pH value thereof thanks to neutralization of acids due to addition of calcareous fly ash CFA. Most metallic elements in alkaline conditions express poor mobility. By hydration of silicate phases, calcium silicate hydrates C-S-H are formed. By hydration of aluminate phases, minerals from the group of ettringite (*Aft*-phase) and monosulphate hydrates (*AFm*-phase) are formed. Thanks to application of calcareous fly ash (CFA), processes of hydration and solidifying leads to solidification of contaminated soil and physical immobilization of heavy metals.

| *Contaminant* | *Mechansm of immobilization in processes of hydration of calcareous fly ash (CFA)* |
|---|---|
| *As* | Integration into a crystalline lattice of Ca-Etringitte $Ca_6Al_2(SO_4)_3(OH)_{12}x12H_2O$ as well as coprecipitation and specific adsorption on the surface of iron minerals. |
| *Cd* | Formation of poorly soluble double salts $CdCa(OH)_4$ by substitution with Ca during formation of portlandite $Ca(OH)_2$ and calcium silicate hydrates *(C-S-Hgel)*. Alternative mechanism is precipitation of poorly soluble carbonate mineral otavite $CdCO_3$ or cadmium orthosilicate $Cd_2SiO_4$. |
| *Pb* | Precipitation of minerals on the surface of calcium alumino-silicate hydrate minerals in the form of sulphate anglesite $PbSO_4$, carbonate cerusite $PbCO_3$ and hydroxides $Pb(OH)_2$. |
| *Zn* | Precipitation of poorly soluble calcium zincate $CaZn_2(OH)_6x2H_2O$ on the surface of calcium alumino-silicate hydrates and mineral smithsonite. Zinc hydroxides $Zn(OH)_2$ and other poorly soluble compounds are formed. |

Zeolites are alumino-silicate minerals with a porous cage-like crystalline structure, which enables cationic exchange and consequently adsorption of contaminants. In remediation of soil, artificial zeolites type *A, X, Y* or *P* are often used, which can be obtained by means of hydrothermal synthesis of natural or artificial materials. Major natural resources of zeolites worldwide are available in the form of zeolitic tuffs, in which the content of zeolites is varying from 40 % per weight up to >90 % per weight. Usually are formed of the following zeolite minerals: analcime $NaAlSi_2O_6 \cdot H_2O$, clinoptilolite $(Na_2,K_2,Ca)_3Al_6Si_{30}O_{72}x21H_2O$, heulandite $(Ca,Na_2)_3Al_6Si_{30}O_{72}x21H_2O$, mordenite $(Ca,Na_2)Al_8Si_{40}O_{96}x28H_2O$, chabazite $(Ca,K_2,Na_2)_2Al_4Si_8O_{24}x12H_2O$, phillipsite $K_2(Ca,Na_2)Al_8Si_{10}O_{32} \cdot 12H_2O$ and some others. In addition to minerals, zeolitic tuffs contain silica, minerals from the clay group, amorphous phase and some other minerals, the content of which is less than 3% per weight.

The crystalline lattice of zeolites is formed by tetrahedrons $SiO_4$ and $AlO_4$, which due to substitution of $Si^{4+}$ with $Al^{3+}$ form negative charged surface sites, which can be filed with cations of heavy metals and alkalis. Adsorption capacity of zeolites depends on the ratio *(Si + Al) : O = 1:2* and *Si:Al*, where the number of aluminium *Al* atoms determines the number of positive charges of adsorbed cations. The crystalline lattice forms a matrix of interconnected channels - a mesoporous structure with dimensions approximately 0,4 to 0,7 nm. During the process of remediation of the soil, water solutions of contaminants from the soil penetrate there-into. These are then in a non-specific manner adsorbed on free adsorption sites, or are exchanged with $Na^+$, $K^+$, $Ca^{2+}$ or $Mg^{2+}$ ions. In this, zeolites express the ability of selective adsorption, namely enhanced affinity in view of removing certain cations of heavy metals (e.g. a very common zeolite mineral clinoptilolite: $Pb^{2+} > Cd^{2+} > Zn^{2+}$). The efficiency of adsorption essentially depends on pH value of the soil, since at low pH values protonation of free adsorption sites protonation occurs, by which the cations of heavy metals are replaced with $H^+$.

Bentonite clay is a mixture of minerals, in which the minerals from the clay group, are predominant, usually montmorillonite $(M^+_y x nH_2O)(Al^{3+}_{2-y}Mg^{2+}_y)Si^{4+}_4O_{10}(OH)_2$, wherein $M^+$ represents cations, which are bond to exchangeable sites. Said mineral belongs to the group of 2 : 1 phyllosilicates - smectites, which consists of aluminium oxide (O) octahedral layers, integrated between two silicium oxide (T) tetrahedral layers, or simplified, *T-O-T* layers. Negative surface charge is generated on the complete surface of the mineral due to isomorphic substitution of $Si^{4+}$ with $Al^{3+}$ in said tetrahedral layer and of $Al^{3+}$ with $Mg^{2+}$ in said tetrahedral layer. Negative electric charge and large specific area of bentonite clay enable ionic exchange and adsorption of cations of heavy metals ($Pb^{2+}$, $Cd^{2+}$, $Zn^{2+}$). Here is included a mechanism of specific adsorption with binding of cations directly to oxygen ligands and form tetrahedral or octahedral layers. Less efficient and more reversible is a process of non-specific adsorption, which occurs by adsorption of hydrated cationic complexes on the surface of tetrahedral layer, where increasing of pH value leads to precipitation of adsorbed contaminant. Major influence on adsorption processes of cations has the pH value of the soil. Processes are more efficient at alkaline pH values, namely in the absence of exchange between cations of heavy metals and $H^+$ ions, by which deprotonation of adsorption sites takes place.

Adsorption of anions to clays occurs at pH values <7 and at terminations_of *T-O-T* layers of clay minerals, where the defects are biggest and cations $Al^{3+}$, $Si^{4+}$ are maximally exposed.

When pH values are low, by excessive $H^+$ a process of hydrolysis and formation of silanol $\equiv SiOH$ and aluminol $\equiv AlOH$ groups is induced, due to which the bridging oxygen bonds *Al-O-Si* in tetrahedrons and octahedrons are split. In this, excessive positive charge is generated, which enables binding of anions or anionic complexes, for example five-valent arsenic *As(V),* which is at low pH values available as $H_2AsO_4^-$ or $HAsO_4^{2-}$.

Said bentonite clay expands in contact with water, as soon as the molecules of water are introduced between the layers T-O-T.

Pozzolanic reactive materials contain alkalis, mostly in the form of, as well as reactive glass-like phase and alumino-silicate minerals. Mixture of calcareous fly ash and aluminosilicates in the form of clays or zeolites by adding water can result in formation of products of a pozzolanic reaction. Such products additionally contribute to stabilization and binding of remediated soil. Glass in zeolite tuffs, bentonite clays and calcareous fly ash (CFA), alumino-silicate minerals (e.g. clays, zeolites, various aluminosilicates in said calcareous fly ash (CFA) as well as sufficient content of free lime *CaO* in said calcareous fly ash (CFA), are components, which by addition of water lead to pozzolanic reaction.

In pozzolanic reactions, both with zeolites and clays, quite similar reaction products are obtained like in hydration of Portland cement. This means that immobilization mechanisms of pollutants in the soil are similar and include both a chemical immobilization (coprecipitation and integration into newly formed minerals) and also physical immobilization within a cemented matrix.

## Claims

1. Process for obtaining health- and environmentally acceptable, chemically neutral and inert construction material, wherein the concentration of water soluble compounds of heavy metals in such material does not exceed pre-determined limit values, namely

$$As \leq 0,50 \text{ mg/kg of dry matter in such obtained construction material;}$$

$$Cd \leq 0,04 \text{ mg/kg of dry matter in such obtained construction material;}$$

$$Pb \leq 0,50 \text{ mg/kg of dry matter in such obtained construction material;}$$

$$Zn \leq 4,00 \text{ mg/kg of dry matter in such obtained construction material;}$$

and wherein said material is obtained from a contaminated soil containing water soluble chemical compounds of heavy metals, which are harmful for the environment and human health, wherein the concentration thereof essentially exceeds the previously mentioned limit values, namely

$$As = 1,00 - 10,00 \text{ mg/kg of dry matter in said contaminated soil;}$$

$$Cd = 0,10 - 1,00 \text{ mg/kg of dry matter in said contaminated soil;}$$

$$Pb = 1,00 - 10,00 \text{ mg/kg of dry matter in said contaminated soil;}$$

and

$$Zn = 5,00 - 50,00 \text{ mg/kg of dry matter in said contaminated soil;}$$

wherein the process comprises the following steps:

i) preparation of the contaminated soil, which includes excavation and separation of dry particles of contaminated soil by means of sieving in order to obtain fractions below 32 mm and above 32 mm, upon which the fraction of particles above 32 mm is crushed to granulation below 32 mm and temporarily deposited;

ii) mixing of such obtained and prepared contaminated soil according to step i) with a dispersion of Fe-nanoparticles;

iii) adding dry bentonite clay in powder form to said mixture of prepared contaminated soil and Fe-nanoparticles by taking into consideration content of the clay fraction within the contaminated soil itself, which is then followed by homogenization of such obtained mixture;

iv) adding calcareous fly ash (CFA), which is followed by mixing and optionally adjusting moisture to optimum value with deviation of ± 2 %.;

v) application of such obtained material by spreading to layers having thickness up to 30 cm and compacting such established layer of construction material by means of suitable building machinery, so that the average density of such compacted layer is ≥ 95 % of the density of the mixture, which is obtained by means of modified Proctor method.

2. Process according to Claim 1, wherein said dispersion of Fe-nanoparticles, which is added to the soil in step ii), contains up to 8 wt. % of maghemite particles, or up to 3 wt. % of nZVI nanoparticles per dry weight of a contaminated soil.

3. Process according to Claim 1 or 2, wherein in the step iii) said bentonite clay is added in amount up to 10 wt. % per dry weight of a contaminated soil.

4. Process for obtaining health- and environmentally acceptable, chemically neutral and inert construction material, wherein the concentration of water soluble compounds of heavy metals in such material does not exceed pre-determined limit values, namely

$$As \le 0,50 \text{ mg/kg of dry matter in such obtained construction material;}$$

$$Cd \le 0,04 \text{ mg/kg of dry matter in such obtained construction material;}$$

$$Pb \le 0,50 \text{ mg/kg of dry matter in such obtained construction material;}$$

$$Zn \le 4,00 \text{ mg/kg of dry matter in such obtained construction material;}$$

and wherein said material is obtained from a contaminated soil containing water soluble chemical compounds of heavy metals, which are harmful for the environment and human health, wherein the concentration thereof essentially exceeds the previously mentioned limit values, namely

$$As = 1,00 - 10,00 \text{ mg/kg of dry matter in said contaminated soil;}$$

$$Cd = 0,10 - 1,00 \text{ mg/kg of dry matter in said contaminated soil;}$$

$$Pb = 1,00 - 10,00 \text{ mg/kg of dry matter in said contaminated soil;}$$

and

$$Zn = 5{,}00 - 50{,}00 \text{ mg/kg of dry matter in said contaminated soil;}$$

wherein the process comprises the following steps:

i) preparation of the contaminated soil, which includes excavation and separation of dry particles of contaminated soil by means of sieving in order to obtain fractions below 32 mm and above 32 mm, upon which the fraction of particles above 32 mm is crushed to granulation below 32 mm and temporarily deposited;

ii) mixing of such obtained and prepared contaminated soil according to step i) with a dispersion of Fe-nanoparticles;

iii) adding zeolitic tuff in powder form to the mixture of contaminated soil and dispersion of Fe-nanoparticles, whenever the content of clay fraction of particles with granulation $\leq 0{,}002$ mm in the soil exceeds 40 wt. % per dry weight of the contaminated primary soil;

iv) adding calcareous fly ash (CFA), which is followed by mixing and optionally adjusting moisture to optimum value with deviation of $\pm$ 2 %;

v) application of such obtained material by spreading to layers having thickness up to 30 cm and compacting such established layer of construction material by means of suitable building machinery, so that the average density of such compacted layer is $\geq 95$ % of the density of the mixture, which is obtained by means of modified Proctor method.

5. Process according to Claim 4, wherein, if the content of clay exceeds 40 wt. % per dry weight of the primary contaminated soil, said zeolitic tuff is added in amount up to 10 wt. % per dry weight of a contaminated soil.

6. Process according to anyone of Claims 1 - 5, wherein calcareous fly ash (CFA) is added in amount up to 20 wt. % per dry weight of a contaminated soil.

7. Process according to anyone of Claims 1-6, wherein the transformation of contaminated soil into a constructional material is performed in-situ or ex-situ.

**Patentansprüche**

1. Verfahren zur Gewinnung von gesundheitlich und umweltfreundlichem, chemisch neutralem und inertem Baumaterial, wobei die Konzentration der wasserlöslichen Verbindungen der Schwermetalle in einem solchen Material vorgegebene Grenzwerte nicht überschreitet, und zwar

$$As \leq 0{,}50 \text{ mg/kg der Trockensubstanz in dem so gewonnenen Baumaterial;}$$

$$Cd \leq 0{,}04 \text{ mg/kg der Trockensubstanz in dem so gewonnenen Baumaterial;}$$

$$Pb \leq 0{,}50 \text{ mg/kg der Trockensubstanz in dem so gewonnenen Baumaterial;}$$

$$Zn \leq 4{,}00 \text{ mg/kg der Trockensubstanz in dem so gewonnenen Baumaterial;}$$

und wobei das genannte Material aus einem kontaminierten Boden gewonnen wird, der wasserlösliche chemische Verbindungen von Schwermetallen enthält, die für die Umwelt und die menschliche Gesundheit schädlich sind, wobei deren Konzentration die zuvor genannten Grenzwerte im Wesentlichen überschreitet, und zwar

$$As = 1{,}00{-}10{,}00 \text{ mg/kg der Trockensubstanz in dem genannten kontaminierten Boden;}$$

$$Cd = 0{,}10{-}1{,}00 \text{ mg/kg der Trockensubstanz in dem genannten kontaminierten Boden;}$$

$Pb = 1,00\text{--}10,00$ mg/kg der Trockensubstanz in dem genannten kontaminierten Boden;

und

$Zn = 5,00\text{--}50,00$ mg/kg der Trockensubstanz in dem genannten kontaminierten Boden;

wobei das Verfahren die folgenden Schritte umfasst:

i) Aufbereitung des kontaminierten Bodens umfassend Aushub, Trennung von trockenen Partikeln aus dem kontaminierten Boden mittels Siebung, um Fraktionen kleiner als 32 mm und größer als 32 mm zu erhalten, wonach der Anteil an Partikeln größer als 32 mm zu einer Körnung kleiner als 32 mm zerkleinert und zwischengelagert wird;
ii) Mischen des so nach Schritt i) gewonnenen und aufbereiteten kontaminierten Bodens mit einer Dispersion von Fe-Nanopartikeln;
iii) Zugabe von trockenem Bentonit-Ton in Pulverform zu der Mischung aus aufbereitetem kontaminiertem Boden und Fe-Nanopartikeln unter Berücksichtigung des Gehalts der Tonfraktzon innerhalb des kontaminierten Bodens, gefolgt von einer Homogenisierung der erhaltenen Mischung;
iv) Zugabe von kalkhaltiger Flugasche (CFA), gefolgt von Mischen und gegebenenfalls Einstellung der Feuchtigkeit auf einen optimalen Wert mit einer Abweichung bis zu $\pm$ 2%;
v) Aufbringen des so erhaltenen Materials durch Aufbringen in Schichten mit einer Dicke bis zu 30 cm und Verdichten der derart hergestellten Baustoffschicht mittels geeigneter Baumaschinen, so dass die mittlere Dichte dieser verdichteten Schicht $\geq$ 95% der Dichte der Mischung beträgt, welche mittels eines modifizierten Proctor-Verfahrens gewonnen wird.

2. Verfahren nach Anspruch 1, wobei die Dispersion von Fe-Nanopartikeln, die dem Boden in Schritt ii) zugegeben wurde, bis zu 8 Gew.-% Maghemit-Partikel enthält, oder bis zu 3 Gew.-% nZVI-Nanopartikel bezogen auf das Trockengewicht des kontaminierten Bodens.

3. Verfahren nach Anspruch 1 oder 2, wobei in Schritt iii) der genannte Bentonitton in einer Menge von bis zu 10 Gew.-% bezogen auf das Trockengewicht des kontaminierten Bodens zugegeben wird.

4. Verfahren zur Gewinnung von gesundheitlich und umweltfreundlichem, chemisch neutralem und inertem Baumaterial, wobei die Konzentration der wasserlöslichen Verbindungen der Schwermetalle in einem solchen Material vorgegebene Grenzwerte nicht überschreitet, und zwar $As \leq 0,50$ mg/kg der Trockensubstanz in dem so gewonnenen Baumaterial;

$Cd \leq 0,04$ mg/kg der Trockensubstanz in dem so gewonnenen Baumaterial;

$Pb \leq 0,50$ mg/kg der Trockensubstanz in dem so gewonnenen Baumaterial;

$Zn \leq 4,00$ mg/kg der Trockensubstanz in dem so gewonnenen Baumaterial;

und wobei das genannte Material aus einem kontaminierten Boden gewonnen wird, der wasserlösliche chemische Verbindungen von Schwermetallen enthält, die für die Umwelt und die menschliche Gesundheit schädlich sind, wobei deren Konzentration die zuvor genannten Grenzwerte im Wesentlichen überschreitet, und zwar

$As = 1,00\text{--}10,00$ mg/kg der Trockensubstanz in dem genannten kontaminierten Boden;

$$Cd = 0{,}10\text{--}1{,}00 \text{ mg/kg der Trockensubstanz in dem genannten kontaminierten Boden;}$$

$$Pb = 1{,}00\text{--}10{,}00 \text{ mg/kg der Trockensubstanz in dem genannten kontaminierten Boden;}$$

und

$$Zn = 5{,}00\text{--}50{,}00 \text{ mg/kg der Trockensubstanz in dem genannten kontaminierten Boden;}$$

wobei das Verfahren die folgenden Schritte umfasst:

i) Aufbereitung des kontaminierten Bodens umfassend Aushub, Trennung von trockenen Partikeln aus dem kontaminierten Boden mittels Siebung, um Fraktionen kleiner als 32 mm und größer als 32 mm zu erhalten, wonach der Anteil an Partikeln größer als 32 mm zu einer Körnung kleiner als 32 mm zerkleinert und zwischengelagert wird;
ii) Mischen des so nach Schritt i) gewonnenen und aufbereiteten kontaminierten Bodens mit einer Dispersion von Fe-Nanopartikeln;
iii) Zugabe von zeolithischem Tuff in Pulverform zu der Mischung aus kontaminiertem Boden und Dispersion von Fe-Nanopartikeln, immer dann, wenn der Gehalt an Tonanteil an Partikeln mit Körnung $\leq 0{,}002$ mm im Boden 40 Gew.-% bezogen auf das Trockengewicht des kontaminierten Primärbodens übersteigt;
iv) Zugabe von kalkhaltiger Flugasche (CFA), gefolgt von Mischen und gegebenenfalls Einstellung der Feuchtigkeit auf einen optimalen Wert mit einer Abweichung bis zu $\pm 2\%$;
v) Aufbringen des so erhaltenen Materials durch Aufbringen in Schichten mit einer Dicke bis zu 30 cm und Verdichten der derart hergestellten Baustoffschicht mittels geeigneter Baumaschinen, so dass die mittlere Dichte dieser verdichteten Schicht $\geq 95\%$ der Dichte der Mischung beträgt, welche mittels eines modifizierten Proctor-Verfahrens gewonnen wird.

5. Verfahren nach Anspruch 4, wobei, wenn der Gehalt an Ton 40 Gew.-% pro Trockengewicht des primären kontaminierten Bodens übersteigt, der zeolithische Tuff in einer Menge bis zu 10 Gew.-%. bezogen auf das Trockengewicht des kontaminierten Bodens zugegeben wird.

6. Verfahren nach einem der Ansprüche 1-5, wobei die kalkhaltige Flugasche (CFA) in einer Menge von bis zu 20 Gew.-%, bezogen auf das Trockengewicht des trockenen kontaminierten Bodens, zugegeben wird.

7. Verfahren nach einem der Ansprüche 1-6, wobei die Umwandlung von kontaminiertem Boden zu Baumaterial in situ oder ex situ durchgeführt wird.

**Revendications**

1. Procédé pour l'obtention d'un matériau de construction inerte et chimiquement neutre, acceptable d'un point de vue environnemental et sanitaire, dans lequel la concentration en composés de métaux lourds hydrosolubles dans ledit matériau ne dépasse pas des valeurs limites prédéterminées, à savoir

$$As \leq 0{,}50 \text{ mg/kg de matière sèche dans un matériau de construction ainsi obtenu ;}$$

$$Cd \leq 0{,}04 \text{ mg/kg de matière sèche dans un matériau de construction ainsi obtenu ;}$$

$$Pb \leq 0{,}50 \text{ mg/kg de matière sèche dans un matériau de construction ainsi obtenu ;}$$

$$Zn \leq 4{,}00 \text{ mg/kg de matière sèche dans un matériau de construction ainsi obtenu ;}$$

et dans lequel ledit matériau est obtenu à partir d'un sol contaminé contenant des composés chimiques de métaux lourds hydrosolubles qui sont nocifs pour l'environnement et la santé humaine, dont la concentration dépasse substantiellement les valeurs limites précédemment mentionnées, à savoir

$$As = 1{,}00\text{-}10{,}00 \text{ mg/kg de matière sèche dans ledit sol contaminé ;}$$

$$Cd = 0{,}10\text{-}1{,}00 \text{ mg/kg de matière sèche dans ledit sol contaminé ;}$$

$$Pb = 1{,}00\text{-}10{,}00 \text{ mg/kg de matière sèche dans ledit sol contaminé ;}$$

et

$$Zn = 5{,}00\text{-}50{,}00 \text{ mg/kg de matière sèche dans ledit sol contaminé ;}$$

le procédé comprenant les étapes suivantes :

i) la préparation du sol contaminé, qui comprend l'excavation et la séparation des particules sèches de sol contaminé par tamisage afin d'obtenir des fractions inférieures à 32 mm et supérieures à 32 mm, la fraction de particules supérieures à 32 mm étant broyée jusqu'à une granulation inférieure à 32 mm et déposée temporairement ;

ii) le mélange du sol contaminé ainsi obtenu et préparé selon l'étape i) avec une dispersion de nanoparticules de Fe ;

iii) l'ajout d'argile de bentonite sèche sous forme de poudre audit mélange de sol contaminé préparé et de nanoparticules de Fe en prenant en considération la teneur de la fraction d'argile dans le sol contaminé lui-même, qui est ensuite suivi par l'homogénéisation du mélange ainsi obtenu ;

iv) l'ajout de cendres volantes riches en calcium (CFA), puis le mélange et éventuellement l'ajustement de l'humidité à une valeur optimale, qui peut dévier jusqu'à $\pm$ 2 % ;

v) l'application du matériau ainsi obtenu par étalement sur des couches d'épaisseur allant jusqu'à 30 cm et le compactage de cette couche de matériau de construction ainsi créée au moyen de machines de construction appropriées, de sorte que la densité moyenne de ladite couche compactée soit $\geq$ 95 % de la densité du mélange qui est obtenu au moyen d'un procédé de Proctor modifié.

2. Procédé selon la revendication 1, dans lequel ladite dispersion de nanoparticules de Fe, qui est ajoutée au sol à l'étape ii), contient jusqu'à 8 % en poids de particules de maghémite, ou jusqu'à 3 % en poids de nanoparticules de nZVI par poids sec d'un sol contaminé.

3. Procédé selon la revendication 1 ou 2, dans lequel à l'étape iii), ladite argile de bentonite est ajoutée en quantité allant jusqu'à 10 % en poids par poids sec d'un sol contaminé.

4. Procédé pour l'obtention d'un matériau de construction inerte et chimiquement neutre, acceptable d'un point de vue environnemental et sanitaire, dans lequel la concentration en composés de métaux lourds hydrosolubles dans ledit matériau ne dépasse pas des valeurs limites prédéterminées, à savoir

$$As \leq 0{,}50 \text{ mg/kg de matière sèche dans un matériau de construction ainsi obtenu ;}$$

$$Cd \leq 0{,}04 \text{ mg/kg de matière sèche dans un matériau de construction ainsi obtenu ;}$$

$$Pb \leq 0{,}50 \text{ mg/kg de matière sèche dans un matériau de construction ainsi obtenu ;}$$

$$Zn \leq 4{,}00 \text{ mg/kg de matière sèche dans un matériau de construction ainsi obtenu ;}$$

et dans lequel ledit matériau est obtenu à partir d'un sol contaminé contenant des composés chimiques de métaux lourds hydrosolubles qui sont nocifs pour l'environnement et la santé humaine, dont la concentration dépasse substantiellement les valeurs limites précédemment mentionnées, à savoir

$$As = 1{,}00\text{-}10{,}00 \text{ mg/kg de matière sèche dans ledit sol contaminé ;}$$

$$Cd = 0{,}10\text{-}1{,}00 \text{ mg/kg de matière sèche dans ledit sol contaminé ;}$$

$$Pb = 1{,}00\text{-}10{,}00 \text{ mg/kg de matière sèche dans ledit sol contaminé ;}$$

et

$$Zn = 5{,}00\text{-}50{,}00 \text{ mg/kg de matière sèche dans ledit sol contaminé ;}$$

le procédé comprenant les étapes suivantes :

i) la préparation du sol contaminé, qui comprend l'excavation et la séparation des particules sèches de sol contaminé par tamisage afin d'obtenir des fractions inférieures à 32 mm et supérieures à 32 mm, la fraction de particules supérieures à 32 mm étant broyée jusqu'à une granulation inférieure à 32 mm et déposée temporairement ;

ii) le mélange du sol contaminé ainsi obtenu et préparé selon l'étape i) avec une dispersion de nanoparticules de Fe ;

iii) l'ajout de tuff zéolithique sous forme de poudre au mélange de sol contaminé et la dispersion des nanoparticules de Fe, chaque fois que la teneur en fraction d'argile des particules ayant une granulation $\leq 0{,}002$ mm dans le sol dépasse 40 % en poids du poids sec du sol primaire contaminé ;

iv) l'ajout de cendres volantes riches en calcium (CFA), puis le mélange et éventuellement l'ajustement de l'humidité à une valeur optimale, qui peut dévier jusqu'à $\pm$ 2 % ;

v) l'application du matériau ainsi obtenu par étalement sur des couches d'épaisseur allant jusqu'à 30 cm et le compactage de cette couche de matériau de construction ainsi créée au moyen de machines de construction appropriées, de sorte que la densité moyenne de ladite couche compactée soit $\geq$ 95 % de la densité du mélange qui est obtenu au moyen d'un procédé de Proctor modifié.

5. Procédé selon la revendication 4, dans lequel, si la teneur en argile dépasse 40 % en poids du sol contaminé primaire sec, ledit tuff zéolithique est ajouté dans une quantité allant jusqu'à 10 % en poids du poids sec d'un sol contaminé.

6. Procédé selon l'une quelconque des revendications 1-5, dans lequel lesdites cendres volantes riches en calcium (CFA) sont ajoutées en quantité allant jusqu'à 20 % en poids du poids sec d'un sol contaminé.

7. Procédé selon l'une quelconque des revendications 1-6, dans lequel la transformation du sol contaminé en matériau de construction est effectuée in-situ et ex-situ.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102974601 A